Europäisches Patentamt

European Patent Office

Office européen des brevets

(19)

(11)    EP 0 998 205 B1

(12)    **EUROPEAN PATENT SPECIFICATION**

(45) Date of publication and mention
of the grant of the patent:
**02.05.2003   Bulletin 2003/18**

(21) Application number: **98929443.4**

(22) Date of filing: **18.06.1998**

(51) Int Cl.[7]: **A23K 3/03**, A01N 37/02

(86) International application number:
**PCT/FI98/00536**

(87) International publication number:
**WO 99/000023 (07.01.1999 Gazette 1999/01)**

(54) **FORMIC ACID SOLUTION WITH REDUCED CORROSIVE EFFECT**

AMEISENSAEURELOESUNG MIT REDUZIERTEM KORROSIONSEFFEKT

SOLUTION D'ACIDE FORMIQUE A EFFET CORROSIF REDUIT

(84) Designated Contracting States:
**AT BE CH CY DE DK ES FR GB GR IE IT LI LU MC
NL PT SE**

(30) Priority: **18.06.1997  FI  972605**

(43) Date of publication of application:
**10.05.2000   Bulletin 2000/19**

(73) Proprietor: **KEMIRA CHEMICALS OY
00101 Helsinki (FI)**

(72) Inventors:
• **ARVOLA, Jouko**
  **FIN-90650 Oulu (FI)**
• **HUKKANEN, Pentti**
  **FIN-90650 Oulu (FI)**
• **HUTTUNEN, Satu**
  **FIN-90570 Oulu (FI)**

• **KORVELA, Timo**
  **FIN-90650 Oulu (FI)**
• **MIETTINEN, Harri**
  **FIN-02400 Kirkkonummi (FI)**

(74) Representative: **Svensson, Johan Henrik
Berggren Oy Ab,
P.O. Box 16
00101 Helsinki (FI)**

(56) References cited:
**EP-A- 0 206 506          EP-A- 0 411 827
WO-A-97/10724          US-A- 4 220 661**

• **BUSKAP OG AVDRATT, Volume 37, No. 4, 1985,
PER WESTGAARD, "Maursyre i Ny Form", pages
246-247.**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 998 205 B1

**Description**

The invention relates to a strong formic acid solution with a reduced corrosive effect and to the use of this formic acid solution in industrial processes, for example in the textile industry, and as an ensiling solution, as well as to a process for reducing the corrosive effect of a formic acid solution.

Aqueous solutions of formic acid are known to be strongly corrosive solutions. The handling and storage of such solutions requires acid-resistant materials. This is a problem in industrial processes and in agriculture, which uses ensiling solutions which contain formic acid. The machinery and equipment coming into contact with the solutions are susceptible to corrosion. Thereby their useful life is shortened, and this causes extra costs to the industry and to farmers. Attempts have been made to find a solution to the problem by adding to the solution substances which reduce corrosion. One such substance is ammonia, which has been found to reduce corrosion substantially. It has been observed that the ammonia amount to be added is clearly smaller than the amount required for the neutralization of the acid. One such option is disclosed in FI patent 61790. The solution composition disclosed in the patent is characterized in that it is an aqueous solution which contains formic acid and a cation. The cation is preferably the ammonium ion, and the ratio of acid to cation is 2:1-4:1, calculated on the basis of chemical equivalents. Furthermore, the water content in the solution is 15-90%, expressed in percentages by weight.

The above state-of-the-art composition has the shortcoming that the corrosion is still too high. Corrosion causes economic losses and complicates the handling of the solution. Thus there is in the art a clear need to reduce the corrosive effect of solutions based on formic acid.

From publication EP-A1-411 827 there is known an ensiling solution which contains a combination of formic acid and octanoic acid. This solution may additionally contain as an optional ingredient ammonia and propionic acid. This publication states that, when used at a rate of 6 l/ton of the forage to be ensiled, formic acid causes problems of corrosion during storage, and that the invention reduces this problem. It is evident that this reduced corrosive effect is based either on the fact that when octanoic acid is used it is possible to use lower doses of formic acid solution or on the addition of octanoic acid itself.

The study of the corrosive effect of formic acid solutions while using various inhibitors revealed the previously known fact that the adding of ammonia to formic acid reduced corrosion. What made this observation surprising was that corrosion reduced clearly when the amount of ammonia was decreased considerably to below the content disclosed in PI patent 61790. The experiments showed that the amount of ammonia had a certain clear minimum point at which the lowest possible corrosion was achieved. If the amount of ammonia was decreased further, the corrosion caused by the solution began to increase. It was shown by the experiments performed that the corrosion of carbon steel in the optimum conditions was less than the corrosion caused by pure water.

The experiments performed also showed that, when an equivalent amount of NaOH was used instead of ammonia, a considerably insignificant corrosion was also achieved.

The principal characteristics of the invention are given in the accompanying claims.

According to the invention there is thus provided a formic acid solution which has a reduced corrosive effect and which contains formic acid and a cation derived from a base, said cation being the ammonium ion, and the ratio of formic acid to the base cation in the solution being higher than 4 as calculated on the basis of chemical equivalents, and which formic acid solution does not contain octanoic acid.

According to the invention there is also provided a process for reducing the corrosive effect of a formic acid solution, in which process there is incorporated into the formic acid solution such an amount of a base that the molar ratio of the formic acid to the base cation is higher than 4 as calculated on the basis of chemical equivalents.

The said ratio of formic acid to the base cation is preferably higher than 4 and at maximum 80, and specifically higher than 4 and at maximum 30.

The said base is preferably ammonia, in which case the base cation is the ammonium ion. The base used may also be sodium hydroxide, in which case the base cation is the sodium ion. Other usable bases include other alkali metal hydroxides, such as potassium hydroxide and lithium hydroxide, the base cation being respectively the potassium ion and the lithium ion. Basic alkaline-earth metal compounds are also possible. In this case the cation may be, for example, Ca or Mg.

The invention is described below in greater detail with reference to examples and the accompanying drawings, in which

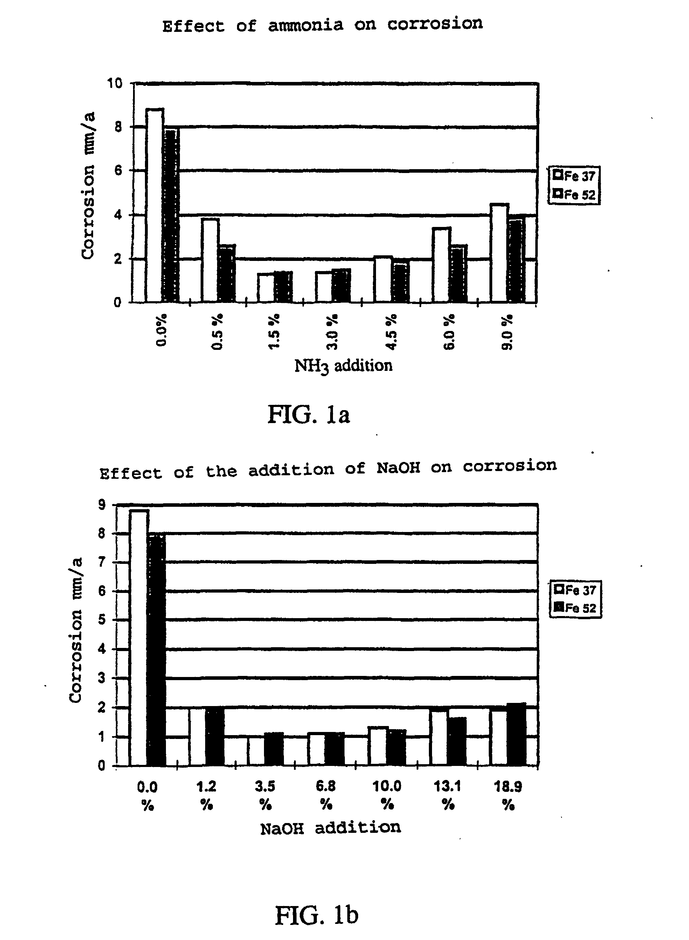

Figure 1    shows results of corrosion experiments in which different amounts of ammonia (Fig. 1a) and equivalent amounts of NaOH (Fig. 1b) were added to a solution containing formic acid, expressed in percentages by weight, and

Figure 2    shows the pH values measured from the solutions according to Figure 1, after the solutions had first been diluted (1 part of solution was added to 9 parts of water). (Fig. 2a and Fig 2b, respectively)

The percentages given in the present specification are percentages by weight, unless otherwise indicated.

**Example 1**

A corrosion test was performed as follows. The test pieces were kept in the solution being tested for 7 days at 30 °C in a closed vessel equipped with a reflux condenser. The solution was stirred continuously. The test pieces, or strips, had been made of two different carbon steels: RAEX base steel (Fe 37) and RAEX multisteel (Fe 52), which are made by Rautaruukki Oy and which are commonly used in those parts of agricultural machinery which come into contact with ensiling solution. After the test sequence the strips were weighed and the corrosion was calculated in units of mm/a. The solutions tested were prepared by using a formic acid with a concentration of 85% and by adding ammonia gas to it. The results are shown in Table 1.

Table 1 shows the formulations of the solutions prepared for the tests. The solutions were prepared by using 1000 g of a formic acid with a concentration of 85%. The ammonia was added in gas form. Column 5 of Table 1 shows in percentages the water content of the solution obtained. Column 6 indicates the molar ratio of acid to the cation ($NH_4^+$). For example, in Experiment 3 of Table 1, the solution was prepared by adding to 1000 g of formic acid (85%) 30.9 g of $NH_3$ gas. Thus a solution was obtained which had an $NH_3$ content of 3%. In this solution the molar amount of formic acid is 850 g/46 g = 18.48, and the molar amount of the cation, which is the same as the molar amount of ammonia, is respectively 30.9 g/17 g = 1.82. The molar ratio of acid to the cation is in this case 10.2, as shown in Table 1.

In the solution ammonium formate is formed, which is present as dissociated ammonium ions and formate ions, i.e.

$$HCOONH_4 \rightarrow HCOO^- + NH_4^+$$

Ammonium diformate or ammonium tetraformate may also be present in the solution, in which case one ammonium molecule binds 2, or respectively 4, formate ions into a more or less stable complex compound.

Table 1

| Results of corrosion tests on solutions which contained formic acid and ammonia. MH stands for 85% HCOOH. | | | | | | | | |
|---|---|---|---|---|---|---|---|---|
| Test | Solution | Formulation (g) MH (85%) NH$_3$ | | H$_2$O-% in solution | Molar ratio | Base steel mm/a | Multisteel mm/a | Remarks |
| 1 | MH + 0.5% NH$_3$ | 1000 | 5.0 | 14.9 | 62.5 | 3.8 | 2.6 | Invention |
| 2 | MH + 1.5% NH$_3$ | 1000 | 15.2 | 14.8 | 20.6 | 1.3 | 1.4 | " |
| 3 | MH + 3.0% NH$_3$ | 1000 | 30.9 | 14.6 | 10.2 | 1.4 | 1.5 | " |
| 4 | MH + 4.5% NH$_3$ | 1000 | 47.1 | 14.3 | 6.7 | 2.1 | 1.9 | " |
| 5 | MH + 6.0% NH$_3$ | 1000 | 63.8 | 14.1 | 4.9 | 3.4 | 2.6 | " |
| 6 | MH + 7.5% NH$_3$ | 1000 | 81.1 | 13.9 | 3.9 | 3.5 | 3.3 | State of the art |
| 7 | MH + 9.0% NH$_3$ | 1000 | 98.9 | 13.7 | 3.2 | 4.5 | 3.9 | " |

Tests 1-5 represent the composition of solutions according to the invention. Respectively, Tests 6 and 7 represent solutions according to state of the art. From the corrosion results it is seen that the lowest corrosion rate (1.3 mm/a for base steel) was obtained in Test 2, in which the corrosion rate was only less than one half of the result of Test 6 (3.3 mm/a), which is the best result obtained with a state-of-the-art solution.

**Example 2**

Corrosion tests 8-15 similar to those in Example 1 were performed, but by using formic acid solutions which contained no ammonia. In addition, a test was performed in which the solution was nothing but tap water. The corrosion results are shown in Table 2.

It is seen from the result of Tests 8-15 in Table 2 that for both steel grades the corrosion rate was multiple with all formic acid concentrations as compared with the solution according to the invention.

Table 2

| Results of corrosion tests with formic acid solutions of different concentrations. | | | | |
|---|---|---|---|---|
| Test | Solution | Base steel mm/a | Multisteel mm/a | Remarks |
| 8 | Tap water | 2.0 | 2.0 | Comparison |
| 9 | 85% HCOOH | 8.8 | 8.0 | " |
| 10 | 81% HCOOH | 13.7 | 8.4 | " |
| 11 | 77% HCOOH | 11.9 | 8.9 | " |
| 12 | 71% HCOOH | 13.2 | 8.5 | " |
| 13 | 68% HCOOH | 9.7 | 12.3 12.3 | " |
| 14 | 63% HCOOH | 8.6 | 13.1 | " |
| 15 | 58% HCOOH | 6.7 | 13.6 | " |
| 16 | 10% HCOOH | 6.4 | 11.4 | Comp. $NH_3$ 0.5% |
| 17 | 5% HCOOH | 8.9 | 11.4 | Comp. $NH_3$ 1.5% |
| 18 | 2% HCOOH | 7.4 | 9.8 | Comp. $NH_3$ 3.0% |
| 19 | 1% HCOOH | 9.0 | 13.9 | Comp. $NH_3$ 4.5% |
| 20 | 0.5% HCOOH | 7.1 | 11.5 | Comp. $NH_3$ 6.0% |
| 21 | 0.1% HCOOH | 2.6 | 2.4 | Comp. $NH_3$ 9.0% |

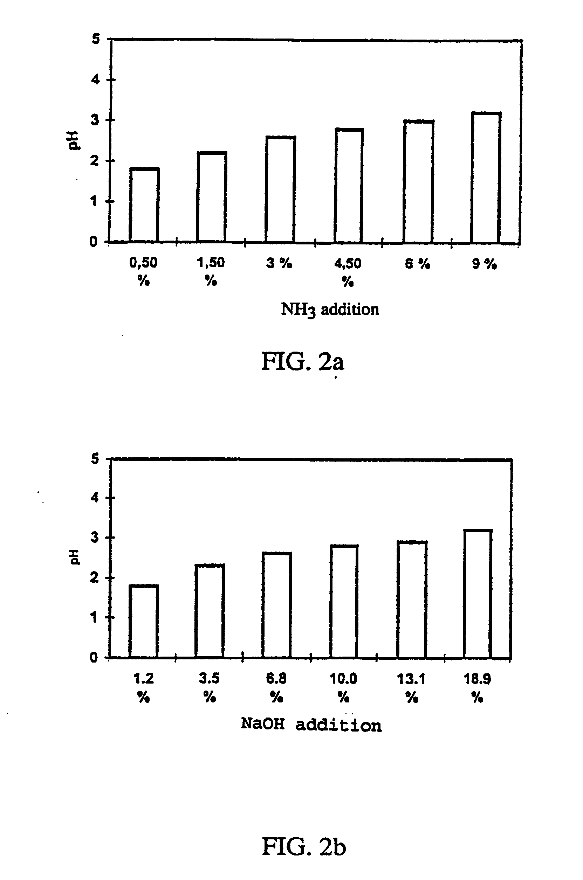

In addition, corrosion tests 16-21 were performed with dilute formic acid solutions without an addition of ammonia so that the pH values of the solutions were the same as those of the corresponding $NH_3$-containing solutions. For example, in Test 19 (1 % HCOOH) the pH of the solution was 2.8, measured from a solution diluted with water (1 part of solution, 9 parts of water). This was also the pH of the solution of Test 4 (4.5 % $NH_3$), as seen in Figure 2a. The corrosion rates in tests 16-21 were considerably high as compared with those with solutions containing ammonia and having the same pH. Tests 16-21 clearly show that the effect of ammonia in reducing the corrosion rate is not based on a raising of the pH by an ammonia addition.

**Example 3**

Corrosion Tests 22-27 were performed in the same way as in Example 1, but NaOH was used instead of ammonia. The amount of NaOH had been selected so that the molar amount of sodium hydroxide obtained was the same as that of ammonia in Tests 1-7 (with the exception of Test 6). Thus also the molar ratio of formic acid to the cation was in these tests the same as in the corresponding tests with ammonia. The results are shown in Table 3. It is to be noted that water is formed when sodium hydroxide is added. This has been taken into account in Table 3, column 5, which shows the water contents of the solutions.

Table 3

| Results of corrosion tests with solutions which contained formic acid and sodium hydroxide. MH stands for 85% HCOOH. | | | | | | | |
|---|---|---|---|---|---|---|---|
| Test | Solution | Formulation (g) MH (85%) | NaOH | $H_2O$ % in solution | Molar ratio | Base steel mm/a | Multisteel mm/a | Remarks |
| 22 | MH + 1.2% NaOH | 1000 | 12.1 | 15.4 | 60.9 | 2.0 | 1.9 | Invention |

Table 3   (continued)

| Test | Solution | Formulation (g) MH (85%) NaOH | | $H_2O$ % in solution | Molar ratio | Base steel mm/a | Multisteel mm/a | Remarks |
|---|---|---|---|---|---|---|---|---|
| | Results of corrosion tests with solutions which contained formic acid and sodium hydroxide. MH stands for 85% HCOOH. | | | | | | | |
| 23 | MH + 3.5% NaOH | 1000 | 36.3 | 16.1 | 20.4 | 1.0 | 1.1 | " |
| 24 | MH + 6.8% NaOH | 1000 | 73.0 | 17.0 | 10.1 | 1.1 | 1.1 | " |
| 25 | MH + 10.0% NaOH | 1000 | 111.1 | 18.0 | 6.7 | 1.3 | 1.2 | " |
| 26 | MH + 13.1% NaOH | 1000 | 150.7 | 18.9 | 4.9 | 1.9 | 1.6 | " |
| 27 | MH + 18.9% NaOH | 1000 | 233.0 | 20.7 | 3.2 | 1.9 | 2.1 | State of the art |

Also with sodium hydroxide the corrosion rates obtained were clearly lower with solutions according to the invention than with state-of-the-art solutions.

The corrosion reaction is the dissolution of iron, i.e. its oxidation to the $Fe^{2+}$ form. Formation of hydrogen takes place at the same time. The corrosion-reducing effect of ammonia may be based on nitrogen adhering to the surface of pure iron, preventing the adhering of hydrogen and thereby preventing the formation of hydrogen gas. Another possible mechanism is that the layer forming on the surface is made up of formate. This mechanism would also explain why an effect similar to that obtained with ammonia is also obtained with NaOH, which does not contain nitrogen. When the amount of ammonia is increased further, the pH of the solution begins to rise, which may promote the increase of the corrosion rate. The corrosion rate clearly has a minimum point at very low amounts of ammonia. Figure 2 shows the pH values measured from diluted solutions. The dilution was carried out by adding 1 part by weight of solution to 9 parts of water. Figure 2b shows that the pH begins to rise when the amount of the base is increased.

On the basis of the test results, the effect on corrosion of the adding of NaOH is very similar to that of ammonia. In fact, the corrosion rate with NaOH is even lower than with ammonia. The corrosion-reducing effect of NaOH is possibly based on Na formate forming with iron poorly soluble complex compounds on the surface of the iron and thereby inhibiting the corrosion reactions.

It is natural to assume that a corrosion-reducing effect is also obtained by using, for example, KOH or LiOH, since they are chemically very similar to NaOH. Likewise it can be assumed that also basic alkaline-earth metal compounds will cause a reduction of corrosion.

On the basis of the tests performed, the lowest corrosion is obtained when the molar ratio of acid to the base cation is >4, preferably >4 and at maximum 80.

## Claims

1. A formic acid solution which has a reduced corrosive effect and which contains formic acid and a cation derived from a base, **characterized in that** said cation is the ammonium ion, and **in that** the ratio of formic acid to the base cation is greater than 4 as calculated on the basis of chemical equivalents, provided that the formic acid solution does not contain octanoic acid.

2. A formic acid solution according to Claim 1, **characterized in that** the said ratio is greater than 4 and at maximum 80.

3. The use of a formic acid solution according to any of the above claims in industrial processes and as an ensiling solution.

4. A process for reducing the corrosion caused by a formic acid solution, **characterized in that** there is incorporated into the formic acid solution such an amount of a base that the ratio of formic acid to the base cation is greater than 4 as calculated on the basis of chemical equivalents.

5. A process according to Claim 4, **characterized in that** the said ratio is greater than 4 and at maximum 80.

6. A process according to Claim 4 or 5, **characterized in that** the said cation is the ammonium ion.

7. A process according to Claim 4 or 5, **characterized in that** the said cation is an alkali metal ion, such as the sodium ion, the potassium ion or the lithium ion, or an alkaline-earth metal ion, such as the calcium ion or the magnesium ion.

**Patentansprüche**

1. Ameisensäurelösung, die einen reduzierten Korrosionseffekt aufweist und die Ameisensäure sowie ein aus einer Base stammendes Kation enthält, **dadurch gekennzeichnet, dass** dieses Kation das Ammoniumion ist und das Verhältnis von Ameisensäure zu dem Kation der Base größer ist als 4, berechnet auf der Basis chemischer Äquivalente, vorausgesetzt, dass die Ameisensäurelösung keine Octansäure enthält.

2. Ameisensäurelösung nach Anspruch 1, **dadurch gekennzeichnet, dass** das Verhältnis größer als 4 und maximal 80 ist.

3. Verwendung einer Ameisensäurelösung nach einem der vorangehenden Ansprüche für industrielle Verfahren und als Silierungslösung.

4. Verfahren zur Reduzierung der durch eine Ameisensäurelösung verursachten Korrosion, **dadurch gekennzeichnet, dass** in die Ameisensäurelösung eine solche Menge einer Base eingearbeitet wird, dass das Verhältnis von Ameisensäure zu dem Kation der Base größer als 4 ist, berechnet auf der Basis chemischer Äquivalente.

5. Verfahren nach Anspruch 4, **dadurch gekennzeichnet, dass** das Verhältnis größer als 4 und maximal 80 ist.

6. Verfahren nach Anspruch 4 oder 5, **dadurch gekennzeichnet, dass** das Kation das Ammoniumion ist.

7. Verfahren nach Anspruch 4 oder 5, **dadurch gekennzeichnet, dass** das Kation ein Alkalimetallion, wie z.B. das Natriumion, das Kaliumion oder das Lithiumion, oder ein Erdalkalimetallion ist, wie z.B. das Calciumion oder das Magnesiumion.

**Revendications**

1. Solution d'acide formique qui a un effet corrosif réduit et qui contient de l'acide formique et un cation dérivé d'une base, **caractérisée en ce que** ledit cation est l'ion ammonium, et **en ce que** le rapport entre l'acide formique et le cation de base est supérieur à 4, comme calculé sur la base d'équivalents chimiques, pourvu que la solution d'acide formique ne contienne pas l'acide octanoïque.

2. Solution d'acide formique selon la revendication 1, **caractérisée en ce que** ledit rapport est supérieur à 4 et est au maximum de 80.

3. Utilisation d'une solution d'acide formique selon l'une quelconque des revendications ci-dessus dans des processus industriels et en tant que solution d'ensilage.

4. Procédé pour réduire la corrosion provoquée par une solution d'acide formique, **caractérisé en ce qu'**est incorporée dans la solution d'acide formique une quantité d'une base telle que le rapport entre l'acide formique et le cation de base est supérieur à 4 comme calculé sur la base d'équivalents chimiques.

**5.** Procédé selon la revendication 4, **caractérisé en ce que** ledit rapport est supérieur à 4 et au maximum de 80.

**6.** Procédé selon la revendication 4 ou 5, **caractérisé en ce que** ledit cation est l'ion ammonium.

**7.** Procédé selon la revendication 4 ou 5, **caractérisé en ce que** ledit cation est un ion de métal alcalin, tel que l'ion sodium, l'ion potassium ou l'ion lithium, ou un ion de métal alcalinoterreux, tel que l'ion calcium ou l'ion magnésium.

EP 0 998 205 B1

**Effect of ammonia on corrosion**

FIG. 1a

**Effect of the addition of NaOH on corrosion**

FIG. 1b

8

FIG. 2a

FIG. 2b